# EUROPEAN PATENT APPLICATION

(11) **EP 4 029 362 A1**
(43) Date of publication of application: **20.07.2022**
(21) Application number: 21151573.9
(22) Date of filing: 14.01.2021
(51) Int. Cl.: A01C 21/00

(54) **METHOD FOR DETERMINING AND PROVIDING AN APPLICATION SCHEME FOR FERTILIZERS**

(71) Applicant: BASF Agro Trademarks GmbH, 67056 Ludwigshafen am Rhein (DE)
(72) Inventor: The designation of the inventor has not yet been filed
(74) Representative: BASF IP Association

(57) **Abstract**

Computer-implemented method for determining and providing an application scheme for fertilizers, comprising the following steps:
providing agricultural crop data (S10) comprising information about an agricultural crop species sown or planned to sow in a field;
providing application time data (S20) comprising information about at least one planned application time of applying fertilizers in the field;
providing nutrient specifier data (S30) comprising information about at least one nutrient specifier present or expected in the field;
performing a database search in a fertilizer product database (S50) at least based on the provided agricultural crop data, the provided application time data, the provided nutrient specifier data and determining the fertilizer products matching the agricultural crop and the application time and one of the nutrient specifiers, wherein the fertilizer product database comprises information about a plurality of fertilizer products, and wherein the information about the fertilizer products comprises at least information about an application area of each fertilizer product, an active ingredient of each fertilizer product and a suitable application time for each fertilizer product;
ranking generated application schemes (S70), wherein the different application schemes (S60) are generated by combining the determined fertilizer products in such a way that at least one nutrient specifier is covered with an efficacy above a defined threshold;
wherein the step of ranking is based on one or more of specific statistics per application scheme.

## Description

### FIELD OF THE INVENTION

The present invention relates to a method for determining and providing an application scheme for fertilizers; the use of such an application scheme for providing control data for controlling an agricultural equipment; and to the use of a fertilizer product database in a method for determining and providing an application scheme for fertilizers.

### BACKGROUND OF THE INVENTION

Using more than one fertilizer product in one application, i.e. by mixing two or more fertilizer products in a tank, is a routine procedure, which can reduce the cost of application, enhance the activity of certain products, and widen the range of treatments in a single application.

However, in practice a user faces several uncertainties when deciding which fertilizer products can be mixed in a tank and can be applied in a single application. One of the uncertainties is given by the fact that for each fertilizer product, an allowed/applicable application time might have to be considered. Moreover, when mixing fertilizer products, it has also to be considered for which agricultural crops, nutrients a respective fertilizer product can be used in a most efficient manner. The goal in this respect is to select a fertilizer product or product mix and doses for a nutrient spectrum, with sufficient efficacy but lowest environmental and economic impact. However, the mentioned factors lead to a large number of possible combinations of fertilizer products across a season when considering the combinations of fertilizer products at a given application time across the season.

In view of this, it is found that a further need exists to simplify such a selection of fertilizer products when using in one application, i.e. in one tank mixture or as a combination.

### SUMMARY OF THE INVENTION

In the view of the above, it is an object of the present invention to provide a method for determining and providing an application scheme for fertilizers, which can be easily applied by a user and by which a respective fertilizer mix recommendation is provided to a user. These and other objects, which become apparent upon reading the following description, are solved by the subject matter of the independent claims. The dependent claims refer to preferred embodiments of the invention.

According to a first aspect of the present disclosure, a method for determining and providing an application scheme for fertilizers is provided, comprising at least the following steps:
- Providing/receiving agricultural crop data comprising information about an agricultural crop species sown or planned to sow in a field;
- Providing/receiving application time data comprising information about at least one planned application time of applying fertilizers in the field;
- providing nutrient specifier data comprising information about at least one nutrient specifier present or expected in the field;
- providing/receiving a fertilizer product database comprising information about a plurality of fertilizer products, wherein the information about the fertilizer products comprises at least information about an application area of each fertilizer product, an active ingredient of each fertilizer product and a suitable application time for each fertilizer product;
- performing a database search in the fertilizer product database at least based on the provided agricultural crop data, the provided application time data, the provided nutrient specifier data and determining the fertilizer products matching the agricultural crop and the application time and at least one of the nutrient specifiers;
- generating different application schemes by combining the determined fertilizer products in such a way that at least one nutrient specifier is covered with an efficacy above a defined threshold; and
- ranking the generated application schemes at least according to the number of fertilizer products per application scheme, wherein it is preferred that the generated application schemes are ranked in view of further parameters/statistics/variables.

According to a second aspect of the present disclosure, a method for determining and providing an application scheme for fertilizers, comprising the following steps:
- providing agricultural crop data comprising information about an agricultural crop species sown or planned to sow in a field;
- providing application time data comprising information about at least one planned application time of applying fertilizers in the field;
- providing nutrient specifier data comprising information about at least one nutrient specifier present or expected in the field;
- performing a database search in a fertilizer product database at least based on the provided agricultural crop data, the provided application time data, the provided nutrient specifier data and determining the fertilizer products matching the agricultural crop and the application time and one of the nutrient specifiers, wherein the fertilizer product database comprises information about a plurality of fertilizer products, and wherein the information about the fertilizer products comprises at least information about an application area of each fertilizer product, an active ingredient of each fertilizer product and a suitable application time for each fertilizer product;
- ranking generated application schemes, wherein the different application schemes are generated by combining the determined fertilizer products in such a way that at least one nutrient specifier is covered with an efficacy above a defined threshold;
- wherein the step of ranking is based on one or more of the following statistics per application scheme:
   a) the number of fertilizer products per application scheme;
   b) the number of leading or priority nutrient specifiers covered with an efficacy above a defined threshold, wherein in an example, the defined threshold is above 80% and wherein in an example this defined threshold represents the most weighted statistic per application scheme;
   c) the number of all nutrient specifiers covered with an efficacy above defined thresholds;
   d) maximum efficacy achieved across nutrient specifiers by a given fertilizer;
   e) the fraction of fertilizers in the application scheme of known preferred usage at the time of application;
   f) the achieved efficacy sum of all fertilizers in the application scheme for leading or priority nutrient specifiers;
   g) the achieved efficacy sum of all fertilizers in the application scheme for all nutrients;
   h) if applicable, the residual efficacy duration in soil; and/or
   i) an index accounting for repeating the mode of action and/or active ingredient compared to previous applications.

In an example, all above-mentioned statistics per application scheme are used for the step of ranking the application schemes; preferably at least two of the above-mentioned statistics are used for the step of ranking the application schemes; preferably at least three of the above-mentioned statistics are used for the step of ranking the application schemes; preferably at least four of the above-mentioned statistics are used for the step of ranking the application schemes; preferably at least five of the above-mentioned statistics are used for the step of ranking the application schemes; preferably at least six of the above-mentioned statistics are used for the step of ranking the application schemes; preferably at least seven of the above-mentioned statistics are used for the step of ranking the application schemes and/or preferably at least eight of the above-mentioned statistics are used for the step of ranking the application schemes.

In an example, , the present invention provides a solution by which a ranking of application schemes based on minimum required information can be provided, in particular without the need to be informed about all the details of each fertilizer product, e.g. the active ingredients of each fertilizer product, their indicators and their allowed application times. Such an application scheme comprises a list of fertilizer products, which can be combined in a mixture for an application, wherein by means of the application scheme all specified nutrients are covered by the provided mixture only comprising fertilizer products that are allowed to be used within the provided application time(s).

The provided application time of applying fertilizers in the field can be a date or a time window, i.e. the date or time window when it is planned to spread fertilizers in a certain field. In one preferred embodiment, the provided application time of applying fertilizers in the field can be a time window ranging from 2 days to 270 days, more preferably a time window ranging from 3 days to 180 days, most preferably a time window ranging from 4 days to 120 days, particularly preferably a time window ranging from 5 days to 90 days, particularly preferably a time window ranging from 6 days to 60 days, particularly a time window ranging from 7 days to 30 days, for example a time window ranging from 8 days to 20 days. In another preferred embodiment, the provided application time of applying fertilizers in the field can be a time window ranging from 20 days to 180 days, more preferably a time window ranging from 30 days to 120 days, most preferably a time window ranging from 60 days to 90 days. In another preferred embodiment, the time window can be one of the three seasonal stages: pre-plant, in-season, and post-harvest. The agricultural crop species sown or planned to sow in a field can be provided by a common or scientific name of the crop or by any other identifier, e.g. a product serial number or the like. A nutrient specifier present or expected in the field can also be provided by a common or scientific name of a nutrient, or also by any other identifier, e.g. an identification number or the like. In this respect, it is only important that such information can be used directly or indirectly for the database search in the fertilizer product database. Finally, the term "performing a database search" is to be understood broadly and already encompasses the input/providing of the database search queries in the fertilizer product database. In the fertilizer product database, the fertilizer may also be listed as a code or code number. In a further aspect of the present disclosure, the step of ranking the generated application schemes according to the statistics may be substituted by the step of outputting/providing/displaying the ranked generated application schemes according to the number of fertilizer products per application scheme.

The fertilizer product database comprises information about the active ingredient(s) of each fertilizer product and a suitable application time for each fertilizer product and the application area of each fertilizer product, e.g. whether a fertilizer product is used for fulfilling a specific nutrient demand and/or for which nutrients a fertilizer product is usually used. The specific nutrient demand could be either crop-based or soil-based. Such a fertilizer product database may cover all or most of the common fertilizer products or may be limited to the fertilizer products of a certain provider. Moreover, it is also possible to limit the fertilizer product database to fertilizer products allowed in a respective jurisdiction. Preferably, the fertilizer product database comprises information about regulatory requirements or restrictions of the country or the administrative region where the field is located regarding the fertilizer application, especially regarding the time, duration, location, dosage, application method and other parameters of the fertilizer application. The fertilizer product database might be provided by a third party. However, it is also possible that a user creates his tailored fertilizer product database by scanning the labels of each fertilizer product he intends to use and by acquiring the respective information about each fertilizer product from supplier databases. By means of the latter, it is also possible that a user supplements a fertilizer product database adding information about further fertilizer products. Notably, the term "fertilizer" according to the present invention is to be understood broadly and may be any fertilizing agent, macronutrient, micronutrient, lime, plant growth regulator, nitrification inhibitor, denitrification inhibitor, urease inhibitor, biological crop protection products (such as beneficial biological products), crop enhancement products, crop enhancers which do or do not include nutrients (e.g. calcium carbonate, lime), substances which improve the soil quality and/or plant health and/or plant growth, soil wetting agents and the like. Preferably, the fertilizer is a fertilizing agent, macronutrient, micronutrient, nitrification inhibitor, denitrification inhibitor, urease inhibitor and the like. More preferably, the fertilizer is a fertilizing agent. Most preferably, the fertilizer is selected from the group consisting of: nitrogen-containing fertilizer, ammonium-containing fertilizer, nitrate-containing fertilizer, urea-containing fertilizer, phosphorus-containing fertilizer (e.g. diammonium phosphate, monoammonium phosphate), potassium-containing fertilizer, boron-containing fertilizer, sulfur-containing fertilizer, sulfate-containing fertilizer, calcium-containing fertilizer, iron-containing fertilizer and chloride-containing fertilizer. The fertilizer can be in liquid or in solid form. Moreover, the fertilizer can be applied either into or onto the soil, or onto the leaves or other parts of a crop plant. Furthermore, the fertilizer can either directly release its active ingredient, or can slowly release its active ingredient (such as slow-release or controlled-release fertilizing agents).

A generated application scheme according to the present invention can be any visualized or none-visualized data/information providing a combination of the determined fertilizer products matching the provided agricultural crop and the application time and at least one nutrient specifier, wherein the determined fertilizer products are combined in an application scheme in such a way that all nutrient specifiers are covered. In the step of generating the application schemes, all or a predefined number of application schemes are provided by combining the determined fertilizer products in such a way that by each combination of the fertilizer products, all nutrient specifiers are covered. Subsequently, these generated application schemes are ranked, in particular in view of the number of fertilizer products required to cover all nutrient specifiers (especially to cover all nutrient specifiers with an efficacy above a defined threshold). The ranked list of application schemes can be provided in a visualized and/or none-visualized form, e.g. by means of a data set which can be further processed by a data processing system or by means of a data processing system comprising a display.

As a result, the present invention provides a solution by which a user receives a ranked number of application schemes covering all nutrient specifiers matching the provided application time(s). Thus, a simplified and more reliable determination of a fertilizer product mix can be provided by applying the present invention.

It is preferred that the agricultural crop data is provided by means of a user interface or by a data processing unit. For example, a respective user interface can be provided by a data processing system, e.g. a computer, a smartphone, a tablet or the like, comprising respective inputting means with which a user can provide the respective information. However, it is also possible that the agricultural crop data is provided by a data processing unit, e.g. a data processing unit of a sowing machine used to sow the agricultural crop in the field or any other data processing unit in which the agricultural crop data is stored.

Preferably, the nutrient specifier is provided by means of a user interface, and/or by means of a data interface, and/or by means of remote or proximal soil sensing of the field, and/or by means of soil analysis of the field, and/or by means of an image recognition of the field. Also here, a respective user interface can be provided by a data processing system, e.g. a computer, a smartphone, a tablet or the like, comprising respective inputting means with which a user can provide the respective information. However, it is also possible to establish a more or less automated process by using data derived from remote or proximal soil sensing of the field, and/or from soil analysis of the field, and/or from image recognition of the respective field, wherein these data can also be provided by a third party analyzing respective images, e.g. satellite or drone images, or analyzing soil or soil samples. In another preferred embodiment, the nutrient specifier is provided by means of a user interface. In another preferred embodiment, the nutrient specifier is provided by means of a data interface, more preferably, the nutrient specifier is provided by means of a data interface in such a way that the data interface provides a computed nutrient specifier, either computed based on predictive modeling, and/or based on historic data related to nutrient specifier in the field, and/or based on machine learning using at least partially historic data related to nutrient specifier in the field. In another preferred embodiment, the nutrient specifier is provided by means of remote or proximal soil sensing, more preferably, the nutrient specifier is provided by means of proximal soil sensing, most preferably, the nutrient specifier is provided by means of proximal soil sensing based on near-infrared sensor, a gamma radiation sensor, an electrical conductivity sensor, a thermometer, an optical camera, or any combination of the above, particularly, the nutrient specifier is provided by means of proximal soil sensing based on near-infrared sensor. In another preferred embodiment, the nutrient specifier is provided by means of soil analysis of the field, wherein the soil analysis more preferably comprises the steps of soil sampling and the analysis of soil properties, and wherein the soil analysis is more preferably a chemical soil analysis (e.g. conducted in a chemical lab facility), a biochemical soil analysis, a physical soil analysis, a mechanical soil analysis, or a combination thereof. In another preferred embodiment, the nutrient specifier is provided by means of an image recognition of the field As far as the nutrient specifier is provided by means of remote or proximal soil sensing of the field, and/or by means of soil analysis of the field, and/or by means of an image recognition of the field, it is preferred that this includes a specific data processing step in which the raw data (such as images, graphics, figures, spectra, tables, numbers, values, instrument readings etc.) obtained by remote or proximal sensing, soil analysis, or image recognition is processed to nutrient specifiers.

The term "nutrient" is to be understood broadly and refers to any chemical substance, any biological organism, or any chemical condition which is used by a crop plant for growth and reproduction or which is beneficial for a crop plant regarding growth and reproduction, including but not limited to
- chemical conditions such as specific pH value, salinity, water retention properties, hydrophilicity or hydrophobicity of the top soil layer or of any other soil layer etc.,
- biological organisms such as rhizobia, Mycorrhizal fungi, soil bacteria, Actinomycetes, Protozoa etc.,
- chemical substances such as organic carbon, soil organic matter, humus, humic acids, boron, phosphorus, potassium, nitrogen, content, sulfur, calcium, iron, aluminum, chlorine, molybdenum, magnesium, nickel, copper, zinc, Manganese, and water.
In a preferred embodiment, nutrient is a chemical substance which is used by a crop plant for growth and reproduction or which is beneficial for a crop plant regarding growth and reproduction, selected from the group consisting of: organic carbon, soil organic matter, humus, humic acids, boron, phosphorus, potassium, nitrogen, content, sulfur, calcium, iron, aluminum, chlorine, molybdenum, magnesium, nickel, copper, zinc, Manganese.

The term "nutrient specifier" is to be understood broadly and refers to any data specifying a nutrient demand of a crop or, of a field, or of a part of a field. In this regard, nutrient specifier preferably comprises soil nutrition data and crop nutrition data, wherein soil nutrition data also comprise the information that certain harvesting residuals can mineralize into nutrients and/or the information that certain nutrients which have been provided to the field to the past are still available. In a preferred embodiment, the nutrient specifier specifies a nutrient demand relating to exactly one nutrient. In another preferred embodiment, the nutrient specifier specifies a combined nutrient demand relating to more than one nutrient, for example relating to at least 2, 3, 4, 5, 6, or 7 nutrients.

The term "nutrient specifier is covered" is to be understood broadly and means that the nutrient demand - specified as nutrient specifier - has been achieved or fulfilled, usually with an efficacy above a specific or defined threshold.

It is further preferred that an application scheme further comprises information about the dosage ranges for each fertilizer product and thresholds, wherein the thresholds may be pre-defined or entered manually, and wherein the predefined thresholds may also be combined with a user defined variable threshold, and wherein the thresholds can also be computed based on further data such as historic data, and/or regulatory data. In this respect, the provided information about the dosage ranges for each fertilizer product may also comprise different dosage ranges for each fertilizer product in view of the crop growth stage or seasonal stage (e.g. pre-plant, in-season, and post-harvest) . Moreover, in particular, if a mixture according to an application scheme is provided by a third party, it is further preferred that prior or during application, the mixture is validated, e.g. by means of a barcode, a QR code, RFID or the like which is provided on the tank mix and which can be scanned by corresponding read-out means such that the actual mixture can be compared with the used application scheme.

Preferably, the method further comprises the step of providing an application map by combining field data and an application scheme. The field data may comprise information about the geographical details, e.g. boundaries, and specifics of the field, the arrangement and the crop growth stage, and/or the distribution/position of the nutrient content and of the nutrient specifier. By providing such field data and combining it with an application scheme, a spatially resolved application map can be provided comprising information about where and which dosage should be spread in the field. Notably, the field data can be provided by a user interface or by means of an image recognition of the respective field. Also here, the respective images can be provided by a satellite or a drone system. In addition, the field data can be provided by a third party, e.g. a service provider analyzing the respective images and application scheme.

Preferably, the fertilizer product information further comprises information about the efficacy of the fertilizer products for fulfilling a specific nutrient demand, and the step of ranking the generated application schemes is further based on the efficacy of the fertilizer products fulfilling a specific nutrient demand. Thereby, not only the number of fertilizer products which are needed to cover all nutrient specifiers (especially to cover all nutrient specifiers with an efficacy above a defined threshold) can be used for ranking the generated application schemes, but also the efficacy of the fertilizer products. The efficacies can be taken from commercial or public available databases and/or expert revisions, wherein if an expert revised efficacy is at hand, such data is preferred. Moreover, the efficacies can be weighted depending on the respective application, e.g. nitrogen fertilization, phosphorus fertilization, sulfur fertilization, potassium fertilization, urease inhibition, nitrification inhibition, or denitrification inhibition. In this respect, efficacies may be either averaged across single efficacies and further weighted by the number of fertilizer products in application scheme. By means of such a ranking the highest efficacy for each nutrient specifier can be found potentially with a minimum number of fertilizer products. In more detail, the ranking may be based on the following statistics per application scheme:
1. the number of fertilizer products per application scheme;
2. the number of leading or priority nutrient specifiers covered with an efficacy above a defined threshold, wherein in an example, the defined threshold is above 80%;
3. the number of all nutrient specifiers covered with an efficacy above defined thresholds;
4. maximum efficacy achieved across nutrient specifiers by a given fertilizer;
5. the fraction of fertilizers in the application scheme of known preferred usage at the time of application;
6. the achieved efficacy sum of all fertilizers in the application scheme for leading or priority nutrient specifiers;
7. the achieved efficacy sum of all fertilizers in the application scheme for all nutrients;
8. if applicable, the residual efficacy duration in soil; and/or
9. an index accounting for repeating the mode of action and/or active ingredient compared to previous applications.

These statistics may be used to calculate ranking values, which may be attributed to each application scheme. In this process, the number of fertilizer products per application scheme (i.e. number 1 above) may be used to penalize for a large number of fertilizer products per application scheme, i.e. resulting in a lower ranking value. Similarly, an index accounting for repeating the mode of action and/or active ingredient compared to previous applications may be used to stimulate or penalize for repeating the mode of action and/or active ingredient compared to previous applications, which may result in a higher or lower ranking value. In contrast, statistics related to efficacy are used to favor those application scheme(s) of higher efficacy, resulting in larger ranking values. Statistics and resulting ranking values may be used to rank the application schemes. For this purpose, statistics and resulting ranking values may be used for ranking stepwise in a determined order. In an example, ranking can be done first by ranking with regard to the number of leading or priority nutrient specifiers covered with an efficacy above a defined threshold (i.e. number 2 above), thereafter ranking application scheme of same rank according to an index accounting for repeating the mode of action and/or active ingredient compared to previous applications, thereafter ranking by other statistics or ranking values.

In a further example, in a first step a first/rough ranking may be done in view of the statistics mentioned-above under the number 2 (i.e. the number of leading or priority nutrient specifiers covered with an efficacy above a defined threshold) outputting a first/rough ranking. Subsequently, the ranking/result of this first/rough ranking is more precisely ranked in a second step, in view of one or more of the statistics mentioned-above under the numbers 1 (i.e. the number of fertilizer products per application scheme) and 3 to 9 (i.e. an index accounting for repeating the mode of action and/or active ingredient compared to previous applications).

In a further example, in a first step a first/rough ranking may be done in view of the statistics mentioned-above under the numbers 3 (i.e. the number of all nutrient specifiers covered with an efficacy above a defined threshold) outputting a first/rough ranking. Subsequently, the ranking/result of this first/rough ranking is more precisely ranked in a second step, in view of one or more of the statistics mentioned-above under the numbers 1 (i.e. the number of fertilizer products per application scheme), 2 and 4 to 9 (i.e. an index accounting for repeating the mode of action and/or active ingredient compared to previous applications).

In yet a further example, in a first step a first/rough ranking may be done in view of the statistics mentioned-above under the number 1 (i.e. the number of fertilizer products per application scheme) outputting a first/rough ranking. Subsequently, the ranking/result of this first/rough ranking is more precisely ranked in a second step, in view of one or more of the statistics mentioned-above under the numbers 2 (i.e. the number of leading or priority nutrient specifiers covered with an efficacy above a defined threshold) to 9 (i.e. an index accounting for repeating the mode of action and/or active ingredient compared to previous applications).

Notably, the above-mentioned statistics relate to preferred parameters/statistics which are considered/used for ranking the generated application schemes. However, further parameters/statistics/information may be considered/used for ranking the generated application schemes.

It is further preferred that the fertilizer product information further comprises information about detrimental effects when mixing specific fertilizer products and that the step of ranking the generated application schemes is further based on the detrimental effects when mixing specific fertilizer products. Thereby, not meaningful fertilizer product combinations or fertilizer product combinations having antagonistic effects can either be removed or listed at the end of the generated application schemes depending on the respective antagonistic effect.

It is preferred that the provided agricultural crop data further comprises information about the actually observed or modelled crop growth stage and the sowing date and that the fertilizer product information further comprises information about the efficacy of the fertilizer products in view of crop growth stage and the sowing date; and that the step of ranking the generated application schemes is further based on the efficacy of the fertilizer products in view of crop growth stage or the sowing time. In particular, the efficacies of each fertilizer product can be provided for the different crop growth stages, e.g. seed, initial, juvenile, mature/flowering, such that a respective efficacy can be taken into account in view of the actual crop growth stage.

Preferably, the provided agricultural crop data further comprises information about the past agricultural crop grown in the field and/or the next agricultural crop planned to be grown in the field; and that the step of ranking the generated application schemes is further based on information about the past agricultural crop grown in the field and/or the next agricultural crop planned to be grown in the field. Thereby, the agricultural crop rotation can be considered when ranking the generated application schemes and a repeated application of the same fertilizer product(s) or the same mode of action can be either preferred or avoided. Therefore, combinations including a repeated application of fertilizer products with the same mode of action and/or a repeated application of the same fertilizer products can be ranked higher or lower.

It is preferred that the nutrient specifier data further comprises information about the nutrient content in the soil and/or the crop nutrient demand based on crop growth stage; and that the fertilizer product information further comprises information about the efficacy in view of the nutrient content in the soil and/or the crop nutrient demand based on crop growth stage ; and that the step of ranking the generated application schemes is further based on the efficacy of the fertilizer products in view of the nutrient content in the soil and/or the crop nutrient demand based on crop growth stage . Thereby, it is possible to further individualize an application scheme to the actual situation in the field. The information about the nutrient content of the soil and/or the crop nutrient demand based on crop growth stage can be provided by a user interface or by means of an image recognition of the respective field. Also here, the respective images can be provided by a satellite or a drone system. In addition, the information about the nutrient content of the soil and/or the crop nutrient demand based on crop growth stage can be provided by a third party, e.g. a service provider analyzing the respective images.

It is further preferred that for the application time(s) weather data is obtained and the fertilizer product information further comprises information about the weather requirements for applying a fertilizer product and/or the efficacy of the fertilizer product in view of the weather conditions and wherein the step of ranking the generated application schemes is further based on the weather requirements for applying a fertilizer product and/or the efficacy of the fertilizer product in view of the weather data. Notably, the weather data can be provided by a third party, e.g. a service provider, or by on-side sensors.

Preferably, the nutrient specifier data further comprises information about a treatment priority and that the step of ranking the generated application schemes is further based on the information about the treatment priority. By means of such a treatment priority information, it can be indicated which nutrient demand can be exceptionally important or beneficial for the agricultural crop and should be treated with priority. For example, the priority information can be provided by a user interface, and/or by means of a data interface, and/or by means of remote or proximal soil sensing of the field, and/or by means of soil analysis of the field, and/or by means of an image recognition of the respective field. Also here, the respective images can be provided by a satellite or a drone system. In addition, the information about the treatment priority can be provided by a third party, e.g. a service provider analyzing the respective images or the soil.

It is preferred that the database search and/or the application schemes can be limited to preselected fertilizer products. For example, a user may preselect fertilizer products already available/stored such that these fertilizer products can be used primarily.

Preferably, an application scheme comprises mixture instructions, including dosage of the fertilizer products and information about useful or required additives to the mixture. For example, minimum, maximum and the recommended dose rate (L/ha) for a fertilizing agent and additive (such as urease inhibitor or nitrification inhibitor), so fertilizing agent and additives have both a dosing logic, can be provided. Moreover, also the detailed tank mix as recipe for a specific field can be provided (e.g. fertilizer1 x L, fertilizer2 x L, additive1 z L, water 3000 L). Thereby, a mixture of the fertilizer products mentioned in an application scheme can be simplified and failures when mixing the fertilizer products can be avoided, e.g. wrong mixing orders, too short stirring times and so on.

Finally, it is preferred that the method further comprises the step of generating control data configured to be used in an agricultural equipment, wherein the control data is based on the highest ranked application scheme or an application scheme selected by a user. For example, a user may select an application scheme depending on his own considerations or priorities by selecting a respective application scheme by respective inputting means of a data processing unit, e.g. a computer, a tablet, a smartphone or the like.

The present invention also relates to the use of an application scheme received according to a method for determining and providing an application scheme for fertilizers as described above for providing control data for controlling an agricultural equipment. In this respect, the term agricultural equipment is to be understood broadly and refers to all machines, data processing units, vehicles, vessels, aircrafts, or unmanned aerial vehicles, e.g. also mixing machines/systems for preparing a fertilizer mixture, transportation and spraying machines for transporting and spraying the fertilizer mixture to or in the field.

The present invention also relates to the use of a fertilizer product database in a method for determining and providing an application scheme for fertilizers as described above, wherein the fertilizer product database comprising information about a plurality of fertilizer products, and wherein the information about the fertilizer products comprises at least information about an application area of each fertilizer product, an active ingredient of each fertilizer product and a suitable application time for each fertilizer product. Also here, the term application area is to be broadly understood and comprises any information about an application information of a fertilizer product database. Moreover, it is also not required that all database entries are structured in the same manner.

Moreover, the present invention also relates to a system for determining and providing an application scheme for fertilizers, comprising: at least one user interface configured to allow an user to input agricultural crop data, a nutrient specifier and application time data; at least one memory unit comprising a fertilizer product database comprising information about a plurality of fertilizer products, and wherein the information about the fertilizer products comprises at least information about an application area of each fertilizer product, an active ingredient of each fertilizer product and a suitable application time for each fertilizer product; at least one processing unit configured to perform a database search in the fertilizer product database at least based on the provided agricultural crop data, the provided application time data, the provided nutrient specifier data and which determines the fertilizer products matching the agricultural crop and the application time and one of the nutrient specifiers; at least on processing unit configured to generate different application schemes by combining the determined fertilizer products in such a way that at least one nutrient specifier is covered with an efficacy above a defined threshold; at least one processing unit configured to rank the generated application schemes according to the number of fertilizer products per application scheme. With respect to the system for determining and providing an application scheme for fertilizers, it is referred to the above-mentioned explanations with respect to the method, which also apply with respect to the system.

Finally, the present invention also relates to a computer program or computer program element configured to execute the above explained method, on an appropriate apparatus or system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

The following Embodiments 1 to 20 are specific embodiments of the present invention.
Embodiment 1: Computer-implemented method for determining and providing an application scheme for fertilizers, comprising the following steps:
   providing agricultural crop data (S10) comprising information about an agricultural crop species sown or planned to sow in a field;
   providing application time data (S20) comprising information about at least one planned application time of applying fertilizers in the field;
   providing nutrient specifier data (S30) comprising information about at least one nutrient specifier present or expected in the field;
   performing a database search in a fertilizer product database (S50) at least based on the provided agricultural crop data, the provided application time data, the provided nutrient specifier data and determining the fertilizer products matching the agricultural crop and the application time and one of the nutrient specifiers, wherein the fertilizer product database comprises information about a plurality of fertilizer products, and wherein the information about the fertilizer products comprises at least information about an application area of each fertilizer product, an active ingredient of each fertilizer product and a suitable application time for each fertilizer product;
   ranking generated application schemes (S70), wherein the different application schemes (S60) are generated by combining the determined fertilizer products in such a way that at least one nutrient specifier is covered with an efficacy above a defined threshold;
      wherein the step of ranking is based on one or more of the following statistics per application scheme:
      a) the number of fertilizer products per application scheme;
      b) the number of leading or priority nutrient specifiers covered with an efficacy above a defined threshold, wherein in an example, the defined threshold is above 80% and wherein in an example this defined threshold represents the most weighted statistic per application scheme;
      c) the number of all nutrient specifiers covered with an efficacy above defined thresholds;
      d) maximum efficacy achieved across nutrient specifiers by a given fertilizer;
      e) the fraction of fertilizers in the application scheme of known preferred usage at the time of application;
      f) the achieved efficacy sum of all fertilizers in the application scheme for leading or priority nutrient specifiers;
      g) the achieved efficacy sum of all fertilizers in the application scheme for all nutrients;
      h) if applicable, the residual efficacy duration in soil; and/or
      i) an index accounting for repeating the mode of action and/or active ingredient compared to previous applications.
Embodiment 2: Method according to Embodiment 1, wherein the method further comprises the step of calculating statistics for each application scheme.
Embodiment 3: Method according to Embodiment 1 or Embodiment 2, wherein in a first step, the ranking is based on the number of all nutrient specifiers covered with a efficacy above defined thresholds and the maximum efficacy achieved across nutrient specifiers by a given fertilizer, wherein it is preferred that in a second step, the ranking is further specified in view of or based on one or more of the following statistics per application scheme:
   a) the number of fertilizer products per application scheme;
   b) maximum efficacy achieved across nutrient specifiers by a given fertilizer;
   c) the fraction of fertilizers in the application scheme of known preferred usage at the time of application;
   d) the achieved efficacy sum of all fertilizers in the application scheme for leading or priority nutrient specifiers;
   e) the achieved efficacy sum of all fertilizers in the application scheme for all nutrients;
   f) if applicable, the residual efficacy duration in soil; and/or
   g) an index accounting for repeating the mode of action and/or active ingredient compared to previous applications.
Embodiment 4: Method according to any one of the preceding Embodiments, wherein the agricultural crop data is provided by means of a user interface or by a data processing unit.
Embodiment 5: Method according to any one of the preceding Embodiments, wherein the nutrient specifier is provided by means of a user interface, and/or by means of a data interface, and/or by means of remote or proximal soil sensing of the field, and/or by means of soil analysis of the field, and/or by means of the image recognition of the field.
Embodiment 6: Method according to any one of the preceding Embodiments, wherein an application scheme further comprises information about the dosage ranges for each fertilizer product and thresholds.
Embodiment 7: Method according to any one of the preceding Embodiments, wherein the method further comprises the step of providing an application map by combining field data and an application scheme.
Embodiment 8: Method according to any one of the preceding Embodiments, wherein
   the fertilizer product information further comprises information about the efficacy of the fertilizer products for fulfilling a specific nutrient demand; and wherein
   the step of ranking the generated application schemes is further based on the efficacy of the fertilizer for fulfilling a specific nutrient demand.
Embodiment 9: Method according to any one of the preceding Embodiments, wherein
   the fertilizer product information further comprises information about detrimental effects when mixing specific fertilizer products; and wherein
   the step of ranking the generated application schemes is further based on the detrimental effects when mixing specific fertilizer products.
Embodiment 10: Method according to any one of the preceding Embodiments, wherein
   the provided agricultural crop data further comprises information about the crop growth stage or the sowing date; and wherein
   the fertilizer product information further comprises information about the efficacy of the fertilizer products in view of crop growth stage or the sowing date; and wherein
   the step of ranking the generated application schemes is further based on the efficacy of the fertilizer products in view of crop growth stage or the sowing time.
Embodiment 11: Method according to any one of the preceding Embodiments, wherein
   the provided agricultural crop data further comprises information about the past agricultural crop grown in the field and/or the next agricultural crop planned to be grown in the field; and wherein
   the step of ranking the generated application schemes is further based on information about the past agricultural crop grown in the field and/or the next agricultural crop planned to be grown in the field.
Embodiment 12: Method according to any one of the preceding Embodiments, wherein
   the nutrient specifier data further comprises information about the nutrient content of the soil and/or the crop nutrient demand based on crop growth stage; and wherein
   the fertilizer product information further comprises information about the efficacy in view of the nutrient content of the soil and/or the crop nutrient demand based on crop growth stage; and wherein
   the step of ranking the generated application schemes is further based on the efficacy of the fertilizer products in view of the nutrient content of the soil and/or the crop nutrient demand based on crop growth stage.
Embodiment 13: Method according to any one of the preceding Embodiments, wherein
   the nutrient specifier data further comprises information about a treatment priority; and wherein
   the step of ranking the generated application schemes is further based on the information about the treatment priority.
Embodiment 14: Method according to any one of the preceding Embodiments, wherein the database search and/or the application schemes are limited to preselected fertilizer products.
Embodiment 15: Method according to any one of the preceding Embodiments, wherein an application scheme comprises mixture instructions about the dosage of the fertilizer products and information about useful or required additives to the mixture.
Embodiment 16: Method according to any one of the preceding Embodiments, wherein the method further comprises the step of generating control data configured to be used in an agricultural equipment, wherein the control data is based on the highest ranked application scheme, or an application scheme selected by a user.
Embodiment 17: Use of an application scheme received according to a method according to any one of Embodiments 1 to 16 for providing control data for controlling an agricultural equipment.
Embodiment 18: Use of a fertilizer product database in a method according to any one of Embodiments 1 to 16, wherein the fertilizer product database comprising information about a plurality of fertilizer products, and wherein the information about the fertilizer products comprises at least information about an application area of each fertilizer product, an active ingredient of each fertilizer product and a suitable application time for each fertilizer product.
Embodiment 19: A system for determining and providing an application scheme for fertilizers, comprising:
   at least one interface for providing agricultural crop data, a nutrient specifier and application time data;
   at least one memory unit comprising a fertilizer product database comprising information about a plurality of fertilizer products, and wherein the information about the fertilizer products comprises at least information about an application area of each fertilizer product, an active ingredient of each fertilizer product and a suitable application time for each fertilizer product;
   at least one processing unit configured to perform a database search in the fertilizer product database at least based on the provided agricultural crop data, the provided application time data, the provided nutrient specifier data and which determines the fertilizer products matching the agricultural crop and the application time and one of the nutrient specifiers;
   at least on processing unit configured to generate different application schemes by combining the determined fertilizer products in such a way that at least one nutrient specifier is covered with an efficacy above a defined threshold;
   at least one processing unit configured to rank the generated application schemes at least according to the number of fertilizer products per application scheme.
Embodiment 20: A computer program element which when executed by a processor is configured to carry out the method according to any of Embodiments 1 to 17.

### Definitions

In the context of the present invention, the term "include" means "comprise".

The term "efficacy" is to be understood broadly and refers to percentage of the nutrient demand - especially crop nutrient demand - which is covered by the fertilizer application. The efficacy may depend on various factors, in case of the efficacy of a phosphorus-containing fertilizer application, the efficacy may depend on the pH value, the clay content, and/or the organic matter content of the soil.

In the context of the present invention, the term "field" is understood to be any area in which crop plants, are produced, grown, sown, and/or planned to be produced, grown or sown. The term "field" includes agricultural fields, horticultural fields, and silvicultural fields. Preferably, field is an agricultural field.

In the context of the present invention, the term "database" is understood to be any organized collection of data, which can be stored and accessed electronically from a computer system, including but not limited to relational database, non-relational database, graph database, network database, cloud database, in-memory database, active database, data warehouse, deductive database, distributed database, embedded data-base, end-user database, hypertext or hypermedia database, knowledge database, mobile database, operational database, parallel database, probabilistic database, real-time database, spatial database, temporal database, terminology-oriented database, and Excel databases. In a preferred embodiment of the present invention, the database is at least one of the following databases: relational database, non-relational data-base, graph database, network database, cloud database, in-memory database, active database, data warehouse, deductive database, distributed database, embedded database, end-user database, hypertext or hypermedia database, knowledge database, mobile database, operational database, parallel database, probabilistic database, real-time database, spatial database, temporal database, terminology-oriented data-base, and Excel databases.##

### BRIEF DESCRIPTION OF THE DRAWINGS

In the following, the invention is described exemplarily with reference to the enclosed figure, in which
- **Figure 1**: is a schematic view of a method according to the preferred embodiment of the present invention;
- **Figure 2**: is a schematic view of a robotic vehicle acquiring soil sensing data of a field.

### DETAILED DESCRIPTION OF EMBODIMENT

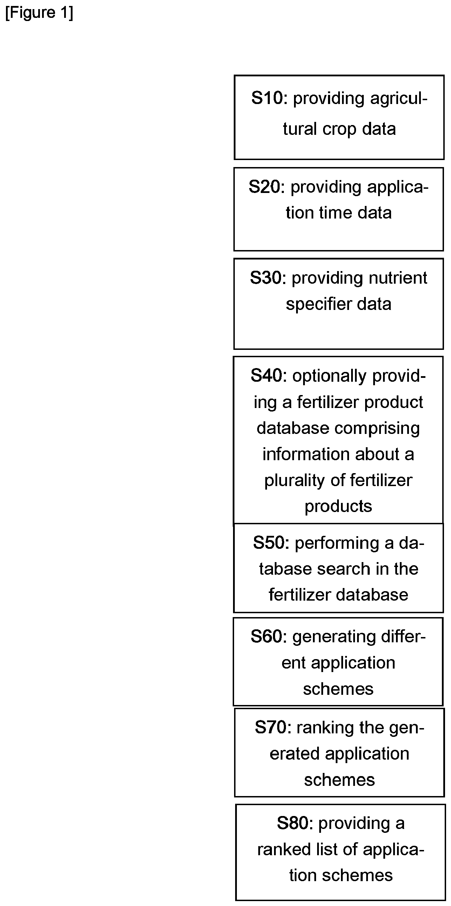

Figure 1 is a schematic view of a method according to the preferred embodiment of the present invention. In the following, an exemplary order of the steps according to the present invention is explained. However, the provided order is not mandatory, i.e. all or several steps may be performed in a different order or simultaneously.

In a step S10, agricultural crop data comprising information about an agricultural crop species sown or planned to sow in a field is provided. For example, this information can be provided by means of a user interface by which a user can provide a common or scientific name of the crop or any other identifier, e.g. a product serial number or the like. Such a user interface can be provided by a data processing system, e.g. a computer, a smartphone, a tablet or the like. Alternatively or in addition, the agricultural crop data may be provided by a data processing unit, e.g. a data processing unit of a sowing machine used to sow the agricultural crop in the field or any other data processing unit in which the agricultural crop data is stored (e.g. an ordering system used for ordering the respective agricultural crop). In this respect, it is only required, that the species and/or variety of the agricultural crop is known for the purpose of the present invention. However, in the preferred embodiment, additional information about the crop growth stage and/or the sowing date and/or information about the past agricultural crop grown in the field and/or the next agricultural crop planned to be grown in the field is provided, since such information can further be used for ranking the generated application schemes and/or for providing further information in an application scheme.

In a step S20, application time data comprising information about at least one planned application time of applying fertilizers in the field is provided. Each application time can be provided as a date or a time window, i.e. the date or the time window when a user plans to spread fertilizers in a certain field. This information can also be provided by means of a user interface by which a user could input the planned application time(s). It is further preferred that for the application time(s) weather data is obtained. Notably, the weather data can be provided by a third party, e.g. a service provider, or by on-side sensors. Moreover, depending on the remaining time until the application time, it is possible to add the weather data at a later point in time and/or to include/update the weather data at a predetermined time interval before the application time.

In a step S30, nutrient specifier data comprising information about a nutrient specifier present or expected in the field are provided. The nutrient specifier can be provided by means of a user interface or by means of an image recognition of the field. Also here, a respective user interface can be provided by a data processing system, e.g. a computer, a smartphone, a tablet or the like, comprising respective inputting means with which a user can provide the respective information. A nutrient specifier present or expected in the field can be provided by a common or scientific name of a nutrient or also by any other identifier, e.g. an identification number or the like. In this respect, it is only important that such information can be used directly or indirectly for the database search in the fertilizer product database. However, it is also possible to establish a more or less automated process by using data derived from image recognition of the respective field, wherein these data can also be provided by a third party analyzing respective images, e.g. satellite or drone images. In the preferred embodiment, additional information about a treatment priority and/or about the nutrient content of the soil and/or the crop nutrient demand based on crop growth stage is provided, since such information can further be used for ranking the application schemes and/or for providing further information in an application scheme.

In an optional step S40, a fertilizer product database comprising information about a plurality of fertilizer products is provided, wherein the information about the fertilizer products comprises at least information about an application area of each fertilizer product, an active ingredient of each fertilizer product and a suitable application time for each fertilizer product. Thus, the fertilizer product database comprises information about the active ingredient(s) of each fertilizer product and a suitable application time for each fertilizer product and the application area of each fertilizer product, e.g. whether a fertilizer product is used for fulfilling a specific nutrient demand and/or for which nutrients a fertilizer product is usually used. Such a fertilizer product database may cover all or most of the common fertilizer products or may be limited to the products of a certain provider. Moreover, it is also possible to limit the fertilizer product database to fertilizer products allowed in a respective jurisdiction. The fertilizer product database might be provided by a third party. However, it is also possible that a user creates his tailored fertilizer product database by scanning the labels of each fertilizer product he intends to use and by acquiring the respective information about each fertilizer product from supplier databases. By means of the latter, it is also possible that a user supplements a fertilizer product database adding information about further fertilizer products. Notably, a fertilizer product according to the present invention can be any fertilizing agent, macronutrient, micronutrient, lime, plant growth regulator, nitrification inhibitor, denitrification inhibitor, urease inhibitor, biological crop protection products (such as beneficial biological products), crop enhancement products, crop enhancers which do or do not include nutrients (e.g. calcium carbonate, lime), substances which improve the soil quality and/or plant health and/or plant growth, soil wetting agents and the like, i.e. the present invention is not limited to a specific kind of fertilizer product.

In the preferred embodiment, the fertilizer product database further comprises information with respect to the efficacy of the fertilizer products for fulfilling a specific nutrient demand, detrimental effects when mixing specific fertilizer products, the efficacy of the fertilizer products in view of crop growth stage or the sowing date, the efficacy in view of the nutrient content of the soil and/or the crop nutrient demand based on crop growth stage, the weather requirements for applying a fertilizer product and/or the efficacy of the fertilizer product in view of the weather conditions.

In a step S50, a database search in the fertilizer database at least based on the provided agricultural crop data, the provided application time data, the provided nutrient specifier data is performed and the fertilizer products matching the agricultural crop and the application time and at least one of the nutrient specifiers are determined. Thus, the output of step S50 are all fertilizer products matching the agricultural crop and the application time and at least one of the nutrient specifiers.

In a step S60, different application schemes are generated by combining the fertilizer products determined in step S50 in such a way that in each combination, i.e. in each generated application scheme, at least one nutrient specifier is covered with an efficacy above a defined threshold by the combined fertilizers products. Notably, the number of the generated application schemes may be limited generating only a predefined number of application schemes. In this respect, a generated application scheme may further comprise information about the dosage ranges for each fertilizer product and thresholds, wherein the thresholds may be pre-defined or entered manually, and wherein the predefined thresholds may also be combined with a user defined variable threshold. The provided information about the dosage ranges for each fertilizer product may also comprise different dosage ranges for each fertilizer product in view of the crop growth stage and/or an infestation stage. In this respect, it is further preferred that an application scheme comprises mixture instructions about the dosage of the fertilizer products and information about useful or required additives to the mixture. Thereby, a mixture of the fertilizer products mentioned in an application scheme can be simplified and failures when mixing the fertilizer products can be avoided, e.g. wrong mixing orders, too short stirring times and so on. Notably, the database search and/or the application schemes can be limited to preselected fertilizer products. For example, a user may preselect fertilizer products already available/stored such that these fertilizer products can be used primarily.

In a step S70, the generated application schemes are ranked according to the number of fertilizer products per application scheme, i.e. an application scheme requiring less fertilizer products for covering all nutrients is ranked higher than an application scheme requiring more fertilizer products. However, the ranking of the application schemes can additionally be based on additional information/requirements. In this respect, it is preferred that the step of ranking the generated application schemes is further based on the efficacy of the fertilizer products for fulfilling a specific nutrient demand, the detrimental effects when mixing specific fertilizer products, the efficacy of the fertilizer products in view of crop growth stage or the sowing time, the past agricultural crop grown in the field and/or the next agricultural crop planned to be grown in the field, the efficacy of the fertilizer products in view of the nutrient content of the soil and/or the crop nutrient demand based on crop growth stage, a treatment priority, the weather requirements for applying a fertilizer product and/or the efficacy of the fertilizer product in view of the weather data.

By the information with respect to the efficacy of the fertilizer products for fulfilling a specific nutrient demand not only the number of fertilizer products which are needed to cover all nutrient specifiers (especially to cover all nutrient specifiers with an efficacy above a defined threshold) can be used for ranking the generated application schemes, but also the efficacy of the fertilizer products. The efficacies can be taken from commercial or public available databases and/or expert revisions, wherein if an expert revised efficacy is at hand, such data is preferred. Moreover, the efficacies can be weighted depending on the respective application, e.g. burn down, second burn down, around planting, emergence, harvesting. In this respect, efficacies may be either averaged across single efficacies and further weighted by the number of fertilizer products in application scheme. By means of such a ranking the highest efficacy for each nutrient specifier can be found potentially with a minimum number of fertilizer products.

By the information with respect to potential detrimental effects when mixing specific fertilizer products, fertilizer product combinations having antagonistic effects can either be removed or listed at the end of the generated application schemes.

By the information with respect to the efficacy of the fertilizer products in view of crop growth stage or the sowing time, a respective efficacy can be taken into account in view of the actual crop growth stage, e.g. seed, initial, juvenile, mature/flowering.

By the information with respect to the past agricultural crop grown in the field and/or the next agricultural crop planned to be grown in the field, the agricultural crop rotation can be considered when ranking the generated application schemes and a repeated application of the same fertilizer product(s) or the same mode of action can be avoided. Therefore, combinations including a repeated application of fertilizer products with the same mode of action and/or a repeated application of the same fertilizer products can be a ranked lower, wherein a repeated application of the same fertilizer products is ranked lower than a repeated mode of action for avoiding resistances.

By the information with respect to the efficacy of the fertilizer products in view of the nutrient content of the soil and/or the crop nutrient demand based on crop growth stage, it is possible to further individualize an application scheme to the actual situation in the field. The information about the nutrient content of the soil and/or the crop nutrient demand based on crop growth stage can be provided by a user interface or by means of an image recognition of the respective field. Also here, the respective images can be provided by a satellite or a drone system. In addition, the information about the nutrient content of the soil and/or the crop nutrient demand based on crop growth stage can be provided by a third party, e.g. a service provider analyzing the respective images.

By the information with respect to a treatment priority, it can be indicated which nutrients can be exceptionally important or beneficial for the agricultural crop and should be treated with priority. The priority information can be provided by a user interface or by means of an image recognition of the respective field. Also here, the respective images can be provided by a satellite or a drone system. In addition, the information about the treatment priority can be provided by a third party, e.g. a service provider analyzing the respective images.

In a step S80, a ranked list of application schemes is provided. However, outputting such a ranked list of application schemes is only optional. Based on the outputted ranked list, a user is could select one of the provided application schemes, which can be used for the further proceedings, e.g. for preparing a control data configured to be used in an agricultural equipment.

Finally, it is preferred that the method further comprises the step of generating control data configured to be used in an agricultural equipment, wherein the control data is based on the highest ranked application scheme or an application scheme selected by a user. For example, a user may select an application scheme depending on his own considerations or priorities by selecting a respective application scheme by respective inputting means of a data processing unit, e.g. a computer, a tablet, a smartphone or the like.

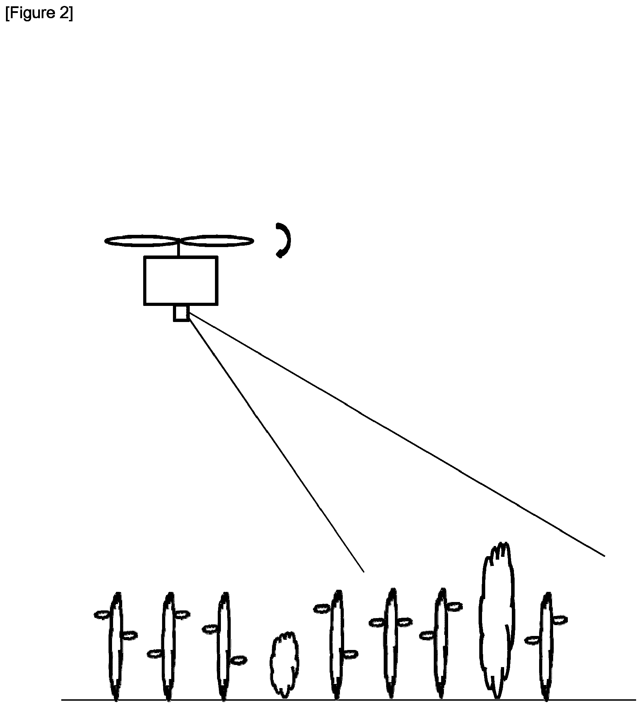

Figure 2 shows an unmanned aerial vehicle (UAV), e.g. a drone, flying over a field containing a crop, which can be used for providing/acquiring the nutrient specifier data. In the crop there may be a number of different crop nutrient demands. One crop is smaller than the other crops, for example because this crop is in a location where the phosphorus content of the soil is very low due to unknown reasons The UAV has a remote or proximal soil sensor camera, and as it flies over the field, soil sensing data are acquired. The UAV also has a GPS and inertial navigation system, which enables both the position of the UAV to be determined and the orientation of the remote or proximal soil sensor also to be determined. From this information, the indications or signs of the specific nutrient demand, can be located with respect to absolute geospatial coordinates. The soil sensing data acquired by the soil sensor is preferably transferred to a processing unit external to the UAV. The processing unit processes the soil sensing data, to determine if a nutrient demand is present and also to determine the type of nutrient needed by a crop plant.

The present invention has been described in conjunction with a preferred embodiment as examples as well. However, other variations can be understood and effected by those persons skilled in the art and practicing the claimed invention, from the studies of the drawings, this disclosure and the claims. Notably, in particular the steps S10 to S40 can be performed in any order, i.e. the present invention is not limited to a specific order of these steps. Moreover, it is also not required that the different steps are performed at a certain place or at one place, i.e. each of the steps may be performed at a different place using different equipment/data processing units. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

### REFERENCE SIGNS

- S10: providing agricultural crop data
- S20: providing application time data
- S30: providing nutrient specifier data
- S40: optionally providing a fertilizer product database
- S50: performing a database search in the fertilizer product database
- S60: generating different application schemes
- S70: ranking the generated application schemes
- S80: providing a ranked list of application schemes

## Claims

1. Computer-implemented method for determining and providing an application scheme for fertilizers, comprising the following steps:
providing agricultural crop data (S10) comprising information about an agricultural crop species sown or planned to sow in a field;
providing application time data (S20) comprising information about at least one planned application time of applying fertilizers in the field;
providing nutrient specifier data (S30) comprising information about at least one nutrient specifier present or expected in the field;
performing a database search in a fertilizer product database (S50) at least based on the provided agricultural crop data, the provided application time data, the provided nutrient specifier data and determining the fertilizer products matching the agricultural crop and the application time and one of the nutrient specifiers, wherein the fertilizer product database comprises information about a plurality of fertilizer products, and wherein the information about the fertilizer products comprises at least information about an application area of each fertilizer product, an active ingredient of each fertilizer product and a suitable application time for each fertilizer product;
ranking generated application schemes (S70), wherein the different application schemes (S60) are generated by combining the determined fertilizer products in such a way that at least one nutrient specifier is covered with an efficacy above a defined threshold;
wherein the step of ranking is based on one or more of the following statistics per application scheme:
a) the number of fertilizer products per application scheme;
b) the number of leading or priority nutrient specifiers covered with an efficacy above a defined threshold, wherein in an example, the defined threshold is above 80% and wherein in an example this defined threshold represents the most weighted statistic per application scheme;
c) the number of all nutrient specifiers covered with an efficacy above defined thresholds;
d) maximum efficacy achieved across nutrient specifiers by a given fertilizer;
e) the fraction of fertilizers in the application scheme of known preferred usage at the time of application;
f) the achieved efficacy sum of all fertilizers in the application scheme for leading or priority nutrient specifiers;
g) the achieved efficacy sum of all fertilizers in the application scheme for all nutrients;
h) if applicable, the residual efficacy duration in soil; and/or
i) an index accounting for repeating the mode of action and/or active ingredient compared to previous applications.

2. Method according to claim 1, wherein the method further comprises the step of calculating statistics for each application scheme.

3. Method according to claim 1 or claim 2, wherein in a first step, the ranking is based on the number of all nutrient specifiers covered with a efficacy above defined thresholds and the maximum efficacy achieved across nutrient specifiers by a given fertilizer, wherein it is preferred that in a second step, the ranking is further specified in view of or based on one or more of the following statistics per application scheme:
a) the number of fertilizer products per application scheme;
b) maximum efficacy achieved across nutrient specifiers by a given fertilizer;
c) the fraction of fertilizers in the application scheme of known preferred usage at the time of application;
d) the achieved efficacy sum of all fertilizers in the application scheme for leading or priority nutrient specifiers;
e) the achieved efficacy sum of all fertilizers in the application scheme for all nutrients;
f) if applicable, the residual efficacy duration in soil; and/or
g) an index accounting for repeating the mode of action and/or active ingredient compared to previous applications.

4. Method according to any one of the preceding claims, wherein the agricultural crop data is provided by means of a user interface or by a data processing unit.

5. Method according to any one of the preceding claims, wherein the nutrient specifier is provided by means of a user interface, and/or by means of a data interface, and/or by means of remote or proximal soil sensing of the field, and/or by means of soil analysis of the field, and/or by means of the image recognition of the field.

6. Method according to any one of the preceding claims, wherein an application scheme further comprises information about the dosage ranges for each fertilizer product and thresholds.

7. Method according to any one of the preceding claims, wherein the method further comprises the step of providing an application map by combining field data and an application scheme.

8. Method according to any one of the preceding claims, wherein
the fertilizer product information further comprises information about the efficacy of the fertilizer products for fulfilling a specific nutrient demand; and wherein
the step of ranking the generated application schemes is further based on the efficacy of the fertilizer for fulfilling a specific nutrient demand.

9. Method according to any one of the preceding claims, wherein
the fertilizer product information further comprises information about detrimental effects when mixing specific fertilizer products; and wherein
the step of ranking the generated application schemes is further based on the detrimental effects when mixing specific fertilizer products.

10. Method according to any one of the preceding claims, wherein
the provided agricultural crop data further comprises information about the crop growth stage or the sowing date; and wherein
the fertilizer product information further comprises information about the efficacy of the fertilizer products in view of crop growth stage or the sowing date; and wherein
the step of ranking the generated application schemes is further based on the efficacy of the fertilizer products in view of crop growth stage or the sowing time.

11. Method according to any one of the preceding claims, wherein
the provided agricultural crop data further comprises information about the past agricultural crop grown in the field and/or the next agricultural crop planned to be grown in the field; and wherein
the step of ranking the generated application schemes is further based on information about the past agricultural crop grown in the field and/or the next agricultural crop planned to be grown in the field.

12. Method according to any one of the preceding claims, wherein
the nutrient specifier data further comprises information about the nutrient content of the soil and/or the crop nutrient demand based on crop growth stage; and wherein
the fertilizer product information further comprises information about the efficacy in view of the nutrient content of the soil and/or the crop nutrient demand based on crop growth stage; and wherein
the step of ranking the generated application schemes is further based on the efficacy of the fertilizer products in view of the nutrient content of the soil and/or the crop nutrient demand based on crop growth stage.

13. Method according to any one of the preceding claims, wherein
the nutrient specifier data further comprises information about a treatment priority; and wherein
the step of ranking the generated application schemes is further based on the information about the treatment priority.

14. Method according to any one of the preceding claims, wherein an application scheme comprises mixture instructions about the dosage of the fertilizer products and information about useful or required additives to the mixture.

15. Method according to any one of the preceding claims, wherein the method further comprises the step of generating control data configured to be used in an agricultural equipment, wherein the control data is based on the highest ranked application scheme, or an application scheme selected by a user.
